# EUROPÄISCHE PATENTSCHRIFT

(11) **EP 3 601 780 B1**
(45) Veröffentlichungstag und Bekanntmachung des Hinweises auf die Patenterteilung: **16.12.2020**
(21) Anmeldenummer: 18711819.5
(22) Anmeldetag: 08.02.2018
(51) Int. Cl.: F03B 11/00, F03B 15/00

(54) **HYDRAULISCHE MASCHINE MIT VORRICHTUNG ZUR MESSUNG DES WASSERSTANDS IM SAUGROHR UND VERFAHREN ZUM ENTWÄSSERN**
HYDRAULIC MACHINE HAVING A DEVICE FOR MEASURING THE WATER LEVEL IN THE INTAKE PIPE AND METHOD FOR DRAINAGE
MACHINE HYDRAULIQUE COMPRENANT UN DISPOSITIF PERMETTANT DE MESURER LE NIVEAU DE L'EAU DANS LE TUYAU D'ASPIRATION ET PROCÉDÉ DE PURGE

(30) Priorität: 29.03.2017 DE 102017106718
(43) Veröffentlichungstag der Anmeldung: 05.02.2020
(73) Patentinhaber: Voith Patent GmbH, 89522 Heidenheim (DE)
(72) Erfinder: KIENLE, Otto, 89522 Heidenheim (DE); STRAUB, Jochen, 89547 Gerstetten (DE)
(74) Vertreter: Voith Patent GmbH - Patentabteilung
(86) Internationale Anmeldenummer: PCT/EP2018/053136
(87) Internationale Veröffentlichungsnummer: WO 2018/177639

(56) Entgegenhaltungen:
- JP-A- S57 212 373
- JP-A- S59 126 082
- US-A1- 2011 188 991
- US-A1- 2014 079 532

## Beschreibung

Die vorliegende Erfindung betrifft das Gebiet der hydraulischen Maschinen. Dabei kann es sich um eine Wasserturbine oder Pumpe oder eine Pumpturbine handeln, die mit einem Generator, Motor oder Motor-Generator kraftschlüssig verbunden ist oder gekuppelt werden kann. Die Erfindung betrifft hydraulische Maschinen mit Laufrädern vom Typ Francis und Kaplan. Die Erfindung betrifft ein Verfahren zum Entwässern des Laufrades einer solchen Maschine.

Eine solche Maschine umfasst ein Laufrad, ein Gehäuse, das im Allgemeinen einen Leitapparat zur Regulierung der Wasserströmung durch das Laufrad aufweist, sowie ein Saugrohr, das bei Verwendung der Maschine als Turbine das aus dem Laufrad ausströmende Wasser führt. Die erfindungsgemäße hydraulische Maschine umfasst ferner eine Vorrichtung zur Messung des Wasserstands im Saugrohr. Die Messung des Wasserstands im Saugrohr wird benötigt, wenn das Laufrad der hydraulischen Maschine entwässert werden soll. Das Entwässern von Laufrädern in hydraulischen Maschinen dient in der Regel zwei unterschiedlichen Zwecken. Im ersten Fall werden Laufräder von Pumpen oder Pumpturbinen zum Anfahren im Pumpbetrieb zunächst im Stillstand entwässert und das Laufrad in Luft auf die Synchrondrehzahl beschleunigt. Im zweiten Fall soll eine hydraulische Maschine im Phasenschieberbetrieb gefahren werden, d.h. es wird keine Wirkleistung bereitgestellt, sondern es erfolgt nur eine Kompensation von im elektrischen Netz erzeugter Blindleistung. Dazu wird das Laufrad, während es sich in Wasser dreht, mit Hilfe einer Vorrichtung zum Entwässern ausgeblasen bis das Laufrad schließlich im Phasenschieberbetrieb in Luft umläuft. Mit Hilfe der Vorrichtung zur Messung des Wasserstandes im Saugrohr kann festgestellt werden, ob der Wasserstand tief genug ist, damit das Laufrad ungehindert in Luft drehen kann.

Gattungsgemäße hydraulische Maschinen sind aus dem allgemeinen Stand der Technik bekannt. So beschreibt beispielsweise die US 3 890 059 eine solche hydraulische Maschine. Figur 1 der genannten Schrift zeigt eine Vorrichtung zur Messung des Wasserstandes im Saugrohr, welche mit 16 bezeichnet ist. Obwohl die Funktionsweise der Vorrichtung in US 3 890 059 nicht weiter spezifiziert ist, kann der Figur 1 entnommen werden, dass die Vorrichtung aus einer senkrecht angeordneten Bypass-Leitung an der Saugrohrwand besteht. Ändert sich der Wasserstand im Saugrohr, so ändert sich der Wasserstand in der genannten Bypass-Leitung nach dem Prinzip der kommunizierenden Röhren. Der Wasserstand in der Bypass-Leitung wird dabei mit mehreren Sensoren detektiert, die entlang der Bypass-Leitung angeordnet sind. Jeder der Sensoren kann feststellen, ob er von Wasser oder von Luft umgeben ist

In JP S59 126082 A ist ein weiteres Beispiel einer Vorrichtung zur Messung des Wasserstandes im Saugrohr einer hydraulischen Maschine offenbart.

Es hat sich gezeigt, dass die aus dem Stand der Technik bekannten Vorrichtungen zur Messung des Wasserstands im Saugrohr oft nicht zuverlässig arbeiten. Das hat folgende Ursachen: Während dem Betrieb und auch beim Entwässern unterliegen die in der Bypass-Leitung angeordneten Sensoren hohen Vibrationen, was dazu führen kann, dass alle oder einige der Sensoren komplett ausfallen. Außerdem führen die Vibrationen während dem Entwässern auch zu instabilen Sensorsignalen, was die Steuerung des Entwässerungsvorgans erschwert. Zudem ist die Herstellung der Bypass-Leitung am Saugrohr aufwändig und verursacht hohe Kosten.

Die Aufgabe der hier vorliegenden Erfindung besteht darin, eine hydraulische Maschine mit einer Vorrichtung zur Messung des Wasserstands im Saugrohr anzugeben, welche robuster gegenüber Vibrationen und kostengünstiger ist, und womit das Entwässern des Laufrades der hydraulischen Maschine zuverlässiger durchgeführt werden kann.

Die Erfinder haben erkannt, dass die gestellte Aufgabe durch eine hydraulische Maschine mit den kennzeichnenden Merkmalen des Anspruchs 1 gelöst werden kann. Vorteilhafte Ausführungsformen ergeben sich aus den von Anspruch 1 abhängigen Unteransprüchen. Die Aufgabe wird durch das Verfahren zum Entwässernd des Laufrades mit den Merkmalen des Anspruchs 4 gelöst.

Die erfindungsgemäße Lösung wird nachfolgend anhand von Figuren erläutert. Darin ist im Einzelnen folgendes dargestellt:
- Figur 1: Erfindungsgemäße hydraulische Maschine;
- Figur 2: Erfindungsgemäßes Verfahren zum Entwässern des Laufrades.

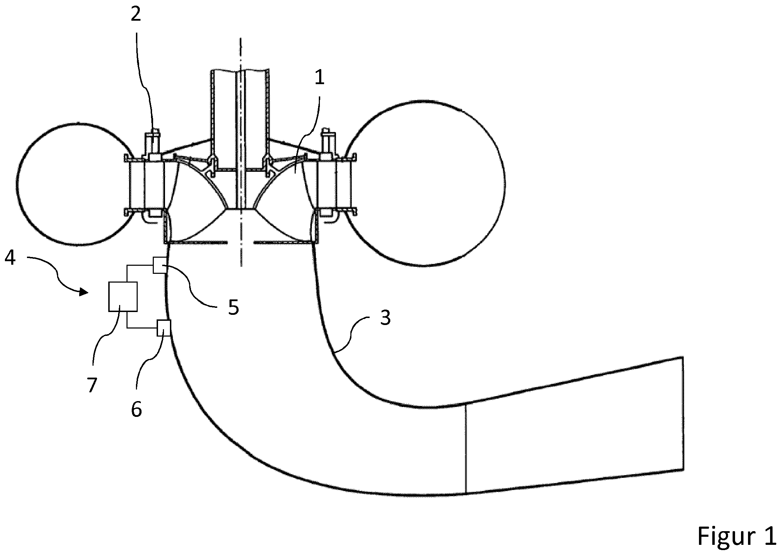

Figur 1 zeigt einen Schnitt durch eine erfindungsgemäße hydraulische Maschine. Die hydraulische Maschine umfasst ein Laufrad, welches mit 1 bezeichnet ist, einen Leitapparat, welcher mit 2 bezeichnet ist, und ein Saugrohr, welches mit 3 bezeichnet ist. Ferner umfasst die hydraulische Maschine eine Vorrichtung zur Messung des Wasserstandes im Saugrohr, welche mit 4 bezeichnet ist. Die Vorrichtung 4 umfasst zwei Druckmesseinrichtungen, welche mit 5 und 6 bezeichnet sind und so ausgebildet sind, dass sie jeweils den Druck im Innern des Saugrohres 3 erfassen können. Jede der Druckmesseinrichtungen 5 und 6 erfasst dabei den an der jeweiligen Stelle anliegenden Druck im Saugrohr. Da das Laufrad 1 einer erfindungsgemäßen hydraulischen Maschine unterhalb des Unterwasserpegels angeordnet ist, ist das gesamte Saugrohr 3 normalerweise komplett mit Wasser gefüllt, und der Druck bei geschlossenem oberwasserseitigen Absperrorgan im Innern des Saugrohrs 3, welcher an einer bestimmten Stelle ansteht, ist der hydrostatische Druck der Wassersäule, die über der betreffenden Stelle im Saugrohr ansteht. Aus Figur 1 ist ersichtlich, dass die Druckmesseinrichtung 5 oberhalb der Druckmesseinrichtung 6 liegt. "Oberhalb" ist hierbei immer in Bezug auf den Wasserstand bezogen, d.h. die Druckmesseinrichtungen müssen nicht direkt übereinander angeordnet sein, sondern sie können sogar auf unterschiedlichen Seiten des Saugrohrs liegen. Die Anordnung muss nur so sein, dass wenn der Wasserstand gerade an der Druckmesseinrichtung 5 verläuft, dann die Druckmesseinrichtung 6 noch unterhalb des Wasserstandes liegt. Ferner umfasst die Vorrichtung 4 noch einen Einheit zur Erzeugung von Differenzdruckwerten, welche mit 7 bezeichnet ist. Die Druckmesseinrichtungen 5 und 6 sind jeweils so mit der Einheit 7 verbunden, dass die Einheit 7 den Differenzdruck zwischen den an den Druckmesseinrichtungen 5 und 6 anliegenden Drücken bilden kann.

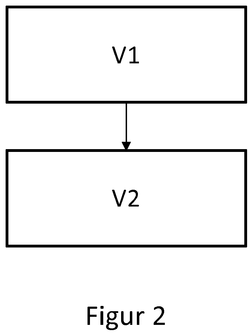

Figur zeigt das Ablaufdiagramm des erfindungsgemäßen Verfahrens zum Entwässern des Laufrades. Ein Entwässerungsvorgang und der damit verbundene Messvorgang des Wasserstandes laufen folgendermaßen ab. Zu Beginn ist das Saugrohr komplett mit Wasser gefüllt. Der Leitapparat 2 wird geschlossen und dichtet das Saugrohr in diese Richtung ab. Dieser Schritt ist in Figur 2 mit V1 bezeichnet. Das Saugrohr bildet so ein U-Rohr mit einem verschlossenen Ende. Das offene Ende dieses U-Rohrs ist das Unterwasser. Die Druckmesseinrichtungen erfassen den Druck der über den jeweiligen Stellen im Saugrohr anstehenden Wassersäule. Da die Wassersäule, die über dem Ort der Druckmesseinrichtung 6 ansteht höher ist, als die Wassersäule, die über dem Ort der Druckmesseinrichtung 5 ansteht, ist der von Druckmesseinrichtung 6 an die Einheit 7 übertragene Druck höher als der Druck, der von der Druckmesseinrichtung 5 an die Einheit 7 übertragen wird. Die Differenz zwischen den beiden in diesem Zustand übertragenen Drücken (Delta_P0) hängt nur von dem Abstand der beiden Druckmesseinrichtungen zueinander in vertikaler Richtung ab. Nun wird zum Beispiel am oberen Rand des Saugrohrs 3 in der Nähe des Laufrads 1 Luft in das Saugrohr 3 eingeblasen. Dieser Schritt ist in Figur 2 mit V2 bezeichnet. Es bildet sich ein Wasserspiegel im Saugrohr aus, welcher den Luftraum vom wassererfüllten Raum trennt. Die Lage des Wasserspiegels entspricht dem Wasserstand. Das durch die eingeführte Luft verdrängte Wasser wird in Richtung Unterwasser abgeführt. Da das Unterwasser ein sehr großes Reservoir darstellt, hebt sich der Unterwasserpegel durch das verdrängte Wasser nicht bzw. nur in vernachlässigbarer Weise. An jeder Stelle des Luftraumes herrscht derselbe Druck, welcher der Wassersäule entspricht, die oberhalb des Wasserspiegels ansteht (in Richtung Unterwasser). Solange der Wasserspiegel oberhalb von der Druckmesseinrichtung 5 verläuft ändert sich nichts an den Druckwerten, die von den Druckmesseinrichtungen 5 und 6 an Einheit 7 übertragenen werden (Druckdifferenz ist Delta_P0). Sinkt der Wasserstand bis unterhalb der Druckmesseinrichtung 5, d.h. wenn sich die Druckmesseinrichtung im Luftraum befindet, so überträgt die Druckmesseinrichtung 5 den Druck der im Luftraum ansteht. Solange die Druckmesseinrichtung 6 sich noch unterhalb des Wasserspiegels befindet überträgt Druckmesseinrichtung 6 denselben Druckwert, wie bisher. Wenn sich also der Wasserspiegel zwischen den Beiden Druckmesseinrichtung 5 und 6 befindet, dann ist die Differenz der Drücke betragsmäßig kleiner als Delta_P0. Wenn der Wasserspiegel so weit sinkt, dass sich auch Druckmesseinrichtung 6 im Luftraum befindet, so übertragen beide Druckmesseinrichtungen den im Luftraum anstehenden Druck und die Druckdifferenz wird Null.

Für die Druckdifferenz Delta_P der übertragenen Drücke ergeben sich also folgende Bereiche:
- Delta_P = Delta_P0, d.h. der Wasserspiegel verläuft oberhalb von Druckmesseinrichtung 5
- Delta_P0 > Delta_P > 0, d.h. der Wasserspiegel verläuft zwischen den beiden Druckmesseinrichtungen 5 und 6
- Delta_P = 0, d.h. der Wasserspiegel verläuft unterhalb von Druckmesseinrichtung 6

Es ist klar, dass im mittleren Bereich (Delta_P0 > Delta_P > 0) die genaue Lage des Wasserspiegels durch eine lineare Interpolation bestimmt werden kann (z.B. wenn Delta_P / Delta_P0 = 0.5 ist, dann befindet sich der Wasserspiegel genau in der Mitte zwischen den vertikalen Positionen der Druckmesseinrichtungen 5 und 6).

Der Entlüftungsvorgang ist abgeschlossen, wenn der gemessene Differenzdruck Delta_P einen vordefinierten Grenzwert unterschreitet.

Da bei der vorliegenden Erfindung im Gegensatz zum bekannten Stand der Technik keine Bypass-Leitung am Saugrohr benötigt wird, sind die Herstellungskosten deutlich geringer.

Das erfinderische Konzept kann in zwei unterschiedlichen Ausführungsformen realisiert werden. Bei einer ersten Ausführungsform sind die Druckmesseinrichtungen 5 und 6 Drucksensoren, die den im Saugrohr anstehenden Druck direkt in ein elektrisches Signal umwandeln. Diese Signale werden durch elektrische Leitungen an eine elektronische Einheit 7 übertragen, die Differenzdruckwerte aus den übertragenen Drucksignalen elektronisch ermittelt. Diese elektronische Einheit kann auch Teil der Steuereinheit sein, die die hydraulische Maschine steuert.

Bei einer zweiten Ausführungsform umfassen die Druckmesseinrichtungen 5 und 6 jeweils Trennmembranen. Die Einheit 7 zur Erzeugung von Differenzdruckwerten besteht aus einem Differenzdruckmessumformer, und die Druckmesseinrichtungen 5 und 6 sind mit dem Differenzdruckmessumformer 7 mittels Übertragungsleitungen (Kapillaren) verbunden. Der Differenzdruckmessumformer 7 wandelt den übertragenen Differenzdruck in ein elektrisches Signal um, das dann von der Steuerung der hydraulischen Maschine verwendet werden kann. Die zweite Ausführungsform hat den Vorteil, dass sie sehr robust gegenüber Vibrationen ist, da die eigentliche Messung im Differenzdruckmessumformer stattfindet und derselbe abseits vom Saugrohr angeordnet sein kann. Die Übertragungsleitungen stellen dabei eine sehr wirksame Entkopplung zwischen Saugrohr 3 und Differenzdruckmessumformer 7 bzgl. Vibrationen dar.

Abschließend sei noch erwähnt, dass der jeweilige Unterwasserpegel lediglich die Druckwerte beeinflusst, die an den Druckmesseinrichtungen 5 und 6 anstehen, nicht jedoch den Differenzdruck. Dadurch wird die Ermittlung des Wasserstandes unabhängig vom jeweilig vorliegenden Unterwasserpegel.

## Patentansprüche

1. Hydraulische Maschine mit einem Laufrad (1), mit einem Leitapparat (2), mit einem Saugrohr (3) und mit einer Vorrichtung (4) zum Messen des Wasserstands im Bereich des Saugrohrs (3), wobei die Vorrichtung (4) eine erste Druckmesseinrichtung (5), eine zweite Druckmesseinrichtung (6) und eine Einheit (7) zur Erzeugung von Differenzdruckwerten umfasst, wobei die Druckmesseinrichtungen (5, 6) jeweils mit der Einheit (7) verbunden sind, und sich die erste Druckmesseinrichtung (5) oberhalb von der zweiten Druckmesseinrichtung (6) befindet, und die Einheit (7) so ausgebildet ist, dass sie die Differenz zwischen den durch die Druckmesseinrichtungen (5, 6) erfassten Drücke erzeugen kann, **dadurch gekennzeichnet, dass** die Druckmesseinrichtungen (5, 6) so angeordnet sind, dass sie die im Innern des Saugrohrs (3) anliegenden Drücke erfassen können.

2. Hydraulische Maschine nach Anspruch 1, wobei die Druckmesseinrichtungen (5 , 6) Drucksensoren zur Erzeugung eines elektrischen Drucksignals sind, und die Einheit (7) eine elektronische Einheit zur Berechnung eines elektrischen Differenzdrucksignals ist, wobei die Drucksensoren (5, 6) mittels Elektrokabeln mit der Einheit (7) verbunden sind.

3. Hydraulische Maschine nach Anspruch 1, wobei die Druckmesseinrichtungen (5, 6) jeweils eine Trennmembran umfassen und die Einheit (7) ein Differenzdruckmessumformer ist, und wobei die Druckmesseinrichtungen (5, 6) jeweils mittels Übertragungsleitungen mit dem Differenzdruckmessumformer (7) verbunden sind.

4. Verfahren zum Entlüften des Laufrades (1) einer hydraulischen Maschine gemäß einem der vorangehenden Ansprüche, wobei das Verfahren die folgenden Schritte in der angegebenen Reihenfolge umfasst:
V1: Schließen des Leitapparats (2);
V2: Einblasen von Luft in das Saugrohr (3) in der Nähe des Laufrades (1);
**dadurch gekennzeichnet, dass** während dem Schritt V2 die Einheit (7) die Differenz zwischen den durch die Druckmesseinrichtungen (5, 6) erfassten Drücke erzeugt und der Schritt V2 abgebrochen wird, nachdem die Druckdifferenz einen vordefinierten Wert unterschreitet.

## Claims

1. Hydraulic machine having a runner (1), having a guide apparatus (2), having a draft tube (3) and having a means (4) for measuring the water level in the region of the draft tube (3), wherein the means (4) comprises a first pressure measurement device (5), a second pressure measurement device (6) and a unit (7) for generating differential pressure values, wherein the pressure measurement devices (5, 6) are each connected to the unit (7), and the first pressure measurement device (5) is situated above the second pressure measurement device (6), and the unit (7) is designed such that it can generate the difference between the pressures detected by the pressure measurement devices (5, 6), **characterized in that** the pressure measurement devices (5, 6) are arranged such that they can detect the pressures prevailing in the interior of the draft tube (3).

2. Hydraulic machine according to Claim 1, wherein the pressure measurement devices (5, 6) are pressure sensors for generating an electrical pressure signal, and the unit (7) is a electronic unit for calculating an electrical differential pressure signal, wherein the pressure sensors (5, 6) are connected to the unit (7) by means of electrical cables.

3. Hydraulic machine according to Claim 1, wherein the pressure measurement devices (5, 6) each comprise a separating membrane, and the unit (7) is a differential pressure transducer, and wherein the pressure measurement devices (5, 6) are each connected to the differential pressure transducer (7) by means of transmission lines.

4. Method for de-aerating the runner (1) of a hydraulic machine according to one of the preceding claims, wherein the method comprises the following steps in the stated order:
V1: closing the guide apparatus (2);
V2: injecting air into the draft tube (3) in the vicinity of the runner (1);
**characterized in that**, during the step V2, the unit (7) generates the difference between the pressures detected by the pressure measurement devices (5, 6), and the step V2 is terminated after the pressure difference falls below a predefined value.

## Revendications

1. Machine hydraulique comprenant une roue à aubes (1), un distributeur (2), un tuyau d'aspiration (3) et un dispositif (4) permettant de mesurer le niveau de l'eau dans la région du tuyau d'aspiration (3), dans laquelle le dispositif (4) comprend un premier dispositif de mesure de pression (5), un deuxième dispositif de mesure de pression (6) et une unité (7) servant à générer des valeurs de pression différentielle, dans laquelle les dispositifs de mesure de pression (5, 6) sont respectivement reliés à l'unité (7), et le premier dispositif de mesure de pression (5) se trouve au-dessus du deuxième dispositif de mesure de pression (6), et l'unité (7) est réalisée de manière à pouvoir générer la différence entre les pressions détectées par les dispositifs de mesure de pression (5, 6),
**caractérisée en ce que** les dispositifs de mesure de pression (5, 6) sont agencés de manière à ce qu'ils puissent détecter les pressions appliquées à l'intérieur du tuyau d'aspiration (3).

2. Machine hydraulique selon la revendication 1, dans laquelle les dispositifs de mesure de pression (5, 6) sont des capteurs de pression destinés à générer un signal de pression électrique, et l'unité (7) est une unité électronique destinée à calculer un signal de pression différentielle électrique, dans laquelle les capteurs de pression (5, 6) sont reliés à l'unité (7) au moyen de câbles électriques.

3. Machine hydraulique selon la revendication 1, dans laquelle les dispositifs de mesure de pression (5, 6) comprennent respectivement une membrane de séparation et l'unité (7) est un transducteur de pression différentielle, et dans laquelle les dispositifs de mesure de pression (5, 6) sont respectivement reliés au transducteur de pression différentielle (7) au moyen de lignes de transmission.

4. Procédé de désaération de la roue à aubes (1) d'une machine hydraulique selon l'une des revendications précédentes, dans lequel le procédé comprend les étapes suivantes dans l'ordre indiqué :
V1 : fermeture du distributeur (2) ;
V2 : injection d'air dans le tuyau d'aspiration (3) à proximité de la roue à aubes (1) ;
**caractérisé en ce que**, pendant l'étape V2, l'unité (7) génère la différence entre les pressions détectées par les dispositifs de mesure de pression (5, 6) et l'étape V2 est interrompue lorsque la différence de pression devient inférieure à une valeur prédéfinie.
